# EUROPEAN PATENT APPLICATION

(11) **EP 4 703 278 A1**
(43) Date of publication of application: **04.03.2026**
(21) Application number: 24795859.8
(22) Date of filing: 12.04.2024
(51) Int. Cl.: B65C 9/18, B65C 9/26, B65H 37/04

(54) **STICKER MACHINE**

(30) Priority: 24.04.2023 CN 202320986078 U; 24.04.2023 CN 202321007280 U; 03.08.2023 CN 202322073984 U; 03.08.2023 CN 202322074062 U; 15.08.2023 CN 202322189177 U; 15.08.2023 CN 202322189130 U; 23.10.2023 CN 202322843296 U; 11.01.2024 CN 202420070955 U
(71) Applicant: Wang, Tianlong, Shenzhen, Guangdong 518052 (CN)
(72) Inventor: Wang, Tianlong, Shenzhen, Guangdong 518052 (CN)
(74) Representative: JD&P Patent Attorneys Joanna Dargiewicz & Partners
(86) International application number: PCT/CN2024/087384
(87) International publication number: WO 2024/222478

(57) **Abstract**

The present disclosure provides an adhesive paper dispenser, for peeling an adhesive paper from a release paper during a paper conveyance process, including: a turning peeling part and an adhesive paper guide part. The turning peeling part is configured to peel the adhesive paper from the release paper by conveying the release paper in a direction different from a traveling direction of the adhesive paper. The adhesive paper guide part is configured to guide the adhesive paper to be conveyed in a specified direction to the turning peeling part, enabling the peeled adhesive paper to enter an output port of the adhesive paper dispenser. In a conveying direction of the adhesive paper, the adhesive paper guide part is arranged upstream of the turning peeling part. The adhesive paper dispenser provided by the present disclosure may facilitate the peeling and dispensing of adhesive papers.

## Description

### TECHNICAL FIELD

The present disclosure relates to the technical field of stationery products, and in particular, to an adhesive paper dispenser.

### BACKGROUND

Adhesive papers are widely used in daily life. Normally, the adhesive paper includes an adhesive surface and a printed surface. The adhesive surface is coated with an adhesive, while the printed surface is preprinted with text, symbols, or patterns. Before use, the adhesive paper is detachably affixed to a release paper. During application, the adhesive paper is peeled from the release paper and attached to the target object.

To facilitate the dispensing of adhesive papers, existing technologies offer various solutions for peeling them from the release paper. For example, a Chinese patent application with publication number CN2280699Y and a U.S. patent application with publication number US5770008A disclose a press-type adhesive paper dispenser. In this dispenser, a friction wheel is driven through a manual press-action rack, which in turn moves the strip material via friction to achieve paper dispensing. As another example, a Japanese patent application with publication number JP1998058764A employs a motor to drive a feed roller, where the friction of the feed roller moves the strip material to enable label printing and dispensing. These existing technologies rely on friction to drive the strip material, resulting in complex structures.

As further another example, a Chinese patent application with publication number CN216003626U involves pulling the strip material in different directions along the extension of the outlet to achieve peeling. However, research from Applicant of the present disclosure has revealed that during the pulling process, the strip material tends to be in a relatively loose state and often bends or deforms. This leads to inconsistent peeling performance-sometimes successful, other times not-and the orientation of the peeled adhesive paper varies significantly. Occasionally, the paper may not even protrude from the outlet.

In view of these limitations, it is necessary to propose a new technical solution to overcome the shortcomings in the related art.

### SUMMARY OF THE DISCLOSURE

The present disclosure aims to overcome the deficiencies of the aforementioned related art and provide an adhesive paper dispenser that facilitates the peeling and output of adhesive paper.

To achieve the above objective, the technical solution adopted in the present disclosure is as follows.

An adhesive paper dispenser, for peeling an adhesive paper from a release paper during a paper conveyance process, including:
a turning peeling part, configured to peel the adhesive paper from the release paper by conveying the release paper in a direction different from a traveling direction of the adhesive paper; and
an adhesive paper guide part, configured to guide the adhesive paper to be conveyed in a specified direction to the turning peeling part, enabling the peeled adhesive paper to enter an output port of the adhesive paper dispenser;
wherein in a conveying direction of the adhesive paper, the adhesive paper guide part is arranged upstream of the turning peeling part.

In some embodiments, the adhesive paper guide part includes a limiting part; the limiting part is arranged on a side of the release paper where the adhesive paper is adhered to restrict bending deformation of the release paper.

In some embodiments, the limiting part is arranged with a plurality of protrusions facing the release paper; the plurality of protrusions are configured to press against the release paper to increase conveying resistance.

In some embodiments, the adhesive paper guide part further includes a bearing part; the bearing part is arranged on another side of the release paper where the adhesive paper is not adhered to support the release paper during the conveying process; an adhesive paper conveyance channel is defined between the bearing part and the limiting part.

In some embodiments, the adhesive paper dispenser further includes a release paper guide part; the release paper guide part is configured to guide the release paper to be conveyed in another specified direction to increase a bending angle of the release paper at the turning peeling part.

In some embodiments, a release paper guide gap is defined between the release paper guide part and the turning peeling part for the release paper to pass through after the adhesive paper is peeled off.

In some embodiments, the release paper guide part includes a peeling edge, and the peeling edge is configured to peel off the adhesive paper that remains adhered to the release paper after passing through the turning peeling part.

In some embodiments, in the conveying direction of the adhesive paper, an upper surface of the turning peeling part extends at an incline away from the release paper guide part.

In some embodiments, the adhesive paper dispenser further includes a housing; the turning peeling part, the adhesive paper guide part, and the release paper guide part are integrally formed on the housing.

In some embodiments, the housing has an adhesive paper storage compartment; the release paper, that is long strip-shaped and adhered with the adhesive paper, is wound into a roll or folded into a stack and placed in the adhesive paper storage compartment.

In some embodiments, the adhesive paper dispenser further includes:
a housing, defining an adhesive paper storage compartment and the output port; wherein the adhesive paper storage compartment is configured to accommodate an adhesive paper roll;
a winding shaft, capable of winding the release paper to convey the adhesive paper to the output port; and
a motor, configured to output rotational power and connected to the winding shaft in a transmission manner;
wherein the motor is at least partially arranged within the adhesive paper storage compartment and adapted to pass through a central positioning hole of the adhesive paper roll.

In some embodiments, the housing includes a cover shell extending into the adhesive paper storage compartment, and the motor is at least partially arranged within the cover shell.

In some embodiments, the cover shell is configured to pass through the central positioning hole to position the adhesive paper roll.

In some embodiments, the cover shell is arranged with an avoidance part configured to define a pick-up space with a wall of the central positioning hole; the adhesive paper roll is adapted to be gripped and removed from the pick-up space.

In some embodiments, the motor is arranged with a positioning part matching with the avoidance part; the positioning part is configured to cooperate with the avoidance part to fix the motor and the cover shell peripherally relative to each other.

In some embodiments, the adhesive paper dispenser further includes:
a photoelectric device, configured to acquire output information of the adhesive paper based on a photoelectric signal; wherein the photoelectric device is arranged close to the output port; and
a light-shielding part, configured to block external light from entering the photoelectric device through the output port for preventing the external light from interfering with the photoelectric signal.

In some embodiments, the light-shielding part is formed on an edge of the output port and extends from the output port towards the photoelectric device.

In some embodiments, a surface of the light-shielding part opposite to an adhesive surface of the adhesive paper is arranged with an anti-adhesion part; the anti-adhesion part is a rib or a protrusion, and a top of the rib or protrusion is formed into a blade edge.

In some embodiments, the adhesive paper is a mosquito-repellent sticker capable of emitting a mosquito-repellent odor, and the adhesive paper dispenser further includes:
a sealing device, detachably sealing the output port, for preventing the mosquito-repellent odor from escaping through the output port in a case where the adhesive paper dispenser is in a non-working state.

In some embodiments, the sealing device includes a plug part and a cover part connected to the plug part; wherein the plug part is configured to be inserted into the output port, and the cover part is configured to cover an outside of the output port.

In some embodiments, the sealing device further includes a connecting part; in a case where the sealing device is separated from the output port, the sealing device is capable of being attached to the adhesive paper dispenser via the connecting part.

In some embodiments, the adhesive paper dispenser further includes:
a housing;
a winding shaft, capable of winding the release paper to convey the adhesive paper to the output port;
an operating member, configured to be operably reciprocating within a set range; and
a transmission mechanism, configured to connect the operating member and the winding shaft in a transmission manner and capable of transmitting power output by the operating member to the winding shaft to drive the winding shaft to drive;
wherein the transmission mechanism includes a one-way clutch device, configured to couple and implement power transmission in a case where the operating member moves in a first direction, and to separate and disconnect the power transmission in a case where the operating member moves in a second direction opposite to the first direction.

In some embodiments, the transmission mechanism is a gear train transmission mechanism including multiple gears coupled to each other; the one-way clutch device includes:
a movable gear, movable between a coupled position and a separated position; and
a force-applying member, configured to apply an elastic force to the movable gear in a direction that maintains the movable gear in the coupled position;
wherein, in a case where the operating member moves in the second direction, the movable gear is capable of overcoming the elastic force to move from the coupled position to the separated position.

In some embodiments, the transmission mechanism is a gear train transmission mechanism including multiple gears coupled to each other; the one-way clutch device includes:
a movable gear, movable between a coupled position and a separated position; and
a force-applying member, configured to apply an elastic force to the movable gear in a direction that maintains the movable gear in the separated position;
wherein, in a case where the operating member moves in the first direction, the movable gear is capable of overcoming the elastic force to move from the separated position to the coupled position.

In some embodiments, the transmission mechanism includes:
a drive gear, disposed upstream of the movable gear in a transmission direction of the power and maintained in coupling with the movable gear; and
a driven gear, disposed downstream of the movable gear in the transmission direction of the power and detachably coupled with the movable gear;
wherein, in a case where the operating member moves in the second direction, the drive gear acts on the movable gear in a direction to separate the movable gear from the driven gear.

By adopting the above technical solution, the present disclosure has the following beneficial effects.

The adhesive paper dispenser provided by the present disclosure includes a turning peeling part and an adhesive paper guide part. In the conveyance direction of the adhesive paper, the adhesive paper guide part is arranged upstream of the turning peeling part. The adhesive paper guide part can guide the adhesive paper to be conveyed in a specified direction to the turning peeling part, such that the peeled adhesive paper enters the output port. Because the adhesive paper conveyed to the turning peeling part is guided by the adhesive paper guide part, causing it to travel in the specified direction, the peeled adhesive paper can enter the output port, thereby facilitating the peeling and output of the adhesive paper.

### BRIEF DESCRIPTION OF THE DRAWINGS

To more clearly illustrate the technical solutions of the embodiments of the present disclosure, the drawings of the embodiments will be briefly described below. Obviously, the drawings in the following description relate only to some embodiments of the present disclosure and are not intended to limit the scope of the present disclosure.
FIG. 1 is a schematic view of an adhesive paper roll.
FIG. 2 is a perspective view of the internal structure of an adhesive paper dispenser, cooperating with an adhesive paper roll, according to some embodiments of the present disclosure.
FIG. 3 is a partially enlarged view of portion A in FIG. 2.
FIG. 4 is a top view of the internal structure of the adhesive paper dispenser, cooperating with the adhesive paper roll, shown in FIG. 2.
FIG. 5 is a partially enlarged view of portion B in FIG. 4.
FIG. 6 is a perspective assembled view of an adhesive paper dispenser according to some embodiments of the present disclosure.
FIG. 7 is a perspective exploded view of the adhesive paper dispenser shown in FIG. 6.
FIG. 8 is a perspective exploded view of the adhesive paper dispenser shown in FIG. 6 from another viewing angle.
FIG. 9 is a perspective view of the adhesive paper dispenser shown in FIG. 6 with a lower cover removed.
FIG. 10 is a perspective assembled view of a motor, a transmission mechanism, and a winding shaft of the adhesive paper dispenser shown in FIG. 6.
FIG. 11 is a perspective exploded view of a motor, a transmission mechanism, and a winding shaft of the adhesive paper dispenser shown in FIG. 6.
FIG. 12 is a perspective exploded view of an adhesive paper dispenser according to other embodiments of the present disclosure.
FIG. 13 is a partially enlarged view of portion C in FIG. 12.
FIG. 14 is a perspective assembled view of the adhesive paper dispenser shown in FIG. 12.
FIG. 15 is a perspective assembled view of an adhesive paper dispenser according to further other embodiments of the present disclosure.
FIG. 16 is a perspective exploded view of the adhesive paper dispenser shown in FIG. 15.
FIG. 17 is a perspective assembled view of an adhesive paper dispenser according to still other embodiments of the present disclosure.
FIG. 18 is a perspective exploded view of the adhesive paper dispenser shown in FIG. 17.
FIG. 19 is a perspective exploded view of the adhesive paper dispenser shown in FIG. 17 from another viewing angle.
FIG. 20 is a perspective assembled view of an operating member and a transmission mechanism in the adhesive paper dispenser shown in FIG. 17.
FIG. 21 is a schematic diagram of the action of a transmission mechanism when an operating member is pressed in the adhesive paper dispenser shown in FIG. 17.
FIG. 22 is a schematic diagram of the action of a transmission mechanism when an operating member is reset in the adhesive paper dispenser shown in FIG. 17.

### Reference Numerals:

| No. | Name | No. | Name | No. | Name |
|---|---|---|---|---|---|
| P1 | Release paper | 1211 | Pick-up space | 53 | Third gear |
| P2 | Adhesive paper | 1220 | Adhesive paper conveyance channel | 54 | Fourth gear |
| 100 | Adhesive paper dispenser | 1221 | Limiting part | 521 | Second gear shaft |
| 101 | Adhesive paper storage compartment | 1222 | Bearing part | 531 | Third gear shaft |
| 102 | Output port | 1240 | Release paper guide gap | 541 | Fourth gear shaft |
| 1 | Housing | 1241 | Peeling edge | 61 | Power switch |
| 11 | Upper cover | 2 | Adhesive paper roll | 62 | Start assembly |
| 121 | Cover shell | 20 | Adhesive paper box | 7 | Sealing device |
| 122 | Adhesive paper guide part | 21 | Conveying section | 71 | Plug part |
| 123 | Turning peeling part | 22 | Release paper roll | 72 | Cover part |
| 124 | Release paper guide part | 23 | Box body | 73 | Connecting part |
| 12 | Base body | 24 | Box cover | 8 | Operating member |
| 13 | Lower cover | 201 | Central positioning hole | 801 | Rack part |
| 131 | Guide groove | 3 | Motor | 81 | Drive gear |
| 14 | Cover plate | 31 | Photoelectric device | 82 | Movable gear |
| 140 | Avoidance hole | 4 | Winding shaft | 811, 821 | Small diameter wheel |
| 1021 | Upper edge | 41 | Sleeve part | 812, 822 | Large diameter wheel |
| 1022 | Lower edge | 5 | Transmission mechanism | 83 | Driven gear |
| 1023 | Light shielding part | 51 | First gear | 84 | Return spring |
| 1024 | Anti-adhesion part | 52 | Second gear | 85 | Elastic part |

### DETAILED DESCRIPTION

To make the objectives, technical solutions, and advantages of the embodiments of the present disclosure clearer, the following will provide a detailed description of the present disclosure in conjunction with the drawings. Typically, the components of the embodiments of the present disclosure described and illustrated in the drawings herein can be arranged and designed in various configurations. Based on the embodiments of the present disclosure, all other embodiments obtained by those skilled in the art without creative effort shall fall within the scope of protection of the present disclosure.

It should be noted that similar reference numerals and letters in the following drawings denote similar items. Therefore, once an item is defined in one drawing, it does not require further definition and explanation in subsequent drawings.

Unless otherwise defined, the technical or scientific terms used in this patent document shall have the ordinary meanings understood by those skilled in the art. The terms "first", "second", and similar words used in the specification and claims of the present disclosure do not denote any order, quantity, or importance but are merely intended to distinguish different components. Similarly, words such as "a", "an", or "the" do not denote quantitative limitations but indicate the presence of at least one. Terms such as "comprise" or "include" mean that the elements or items appearing before "comprise" or "include" cover the elements or items listed after "comprise" or "include" and their equivalents, without excluding other elements or items. Terms such as "center", "upper", "lower", "left", "right", "vertical", "horizontal", "inner", and "outer" are intended only to indicate relative positional relationships. When the absolute position of the described object changes, the relative positional relationship may also change accordingly. These terms are intended only to facilitate the description of the present disclosure and simplify the description, and do not indicate or imply that the referred device or component must have a specific orientation or be constructed and operated in a specific orientation. Therefore, they should not be construed as limiting the present disclosure.

In the description of the present disclosure, it should be noted that unless otherwise explicitly specified and defined, the terms "install", "connect", and "link" should be understood broadly. For example, they may refer to fixed connections, detachable connections, or integrated connections; mechanical connections or electrical connections; direct connections or indirect connections through an intermediate medium; or internal connections between two components. Those skilled in the art can understand the specific meanings of the above terms in the present disclosure based on the specific context.

The following will provide a detailed description of some embodiments of the present disclosure in conjunction with the drawings. The features of the following embodiments may be combined with each other without conflict.

### Embodiment 1

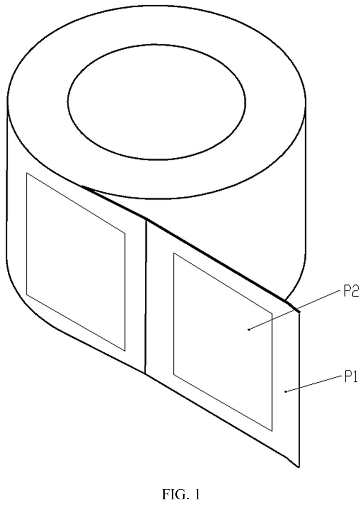

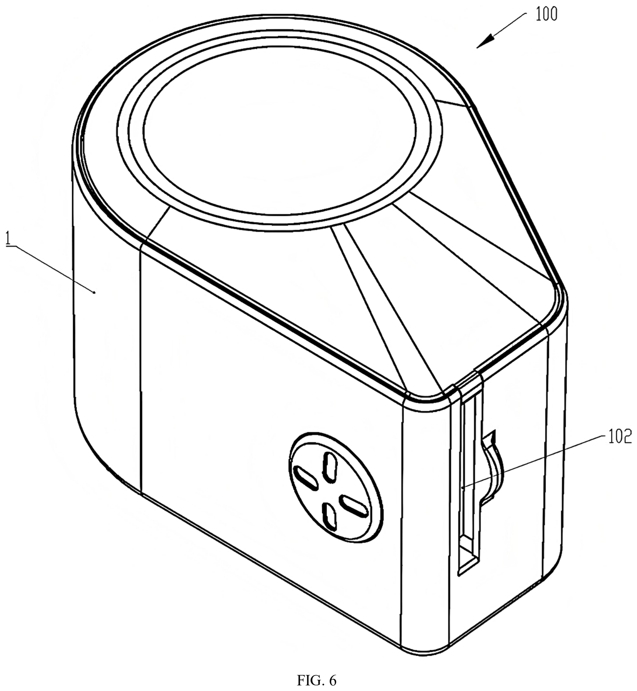

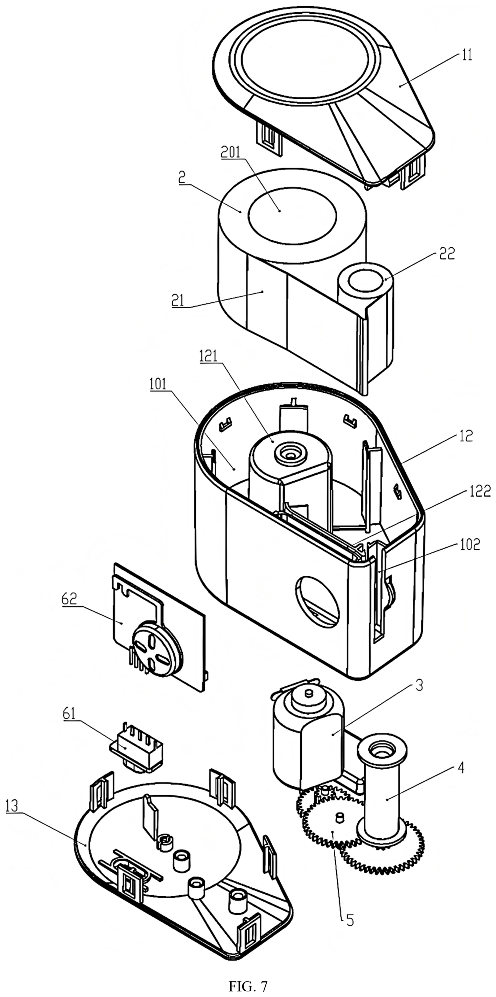

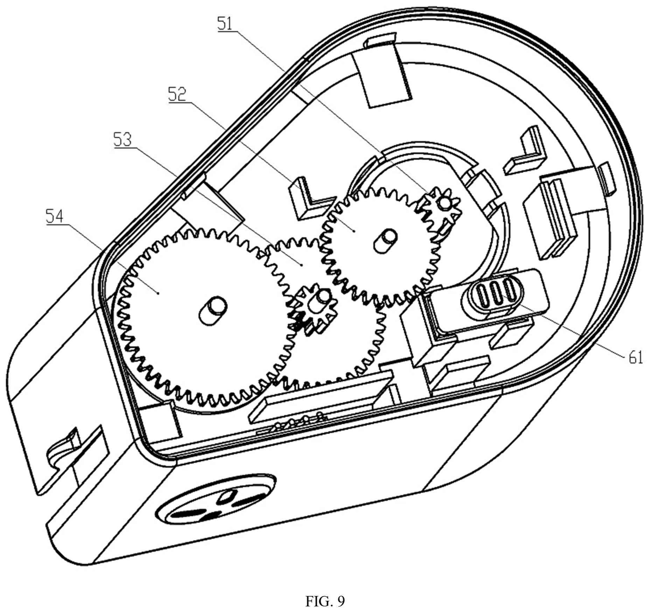

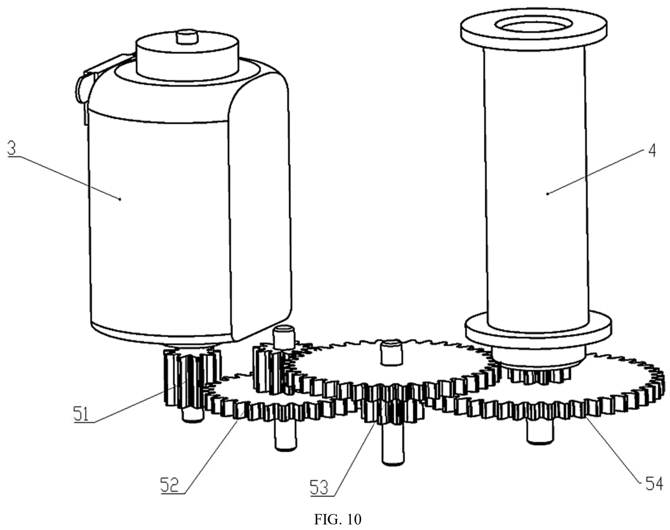

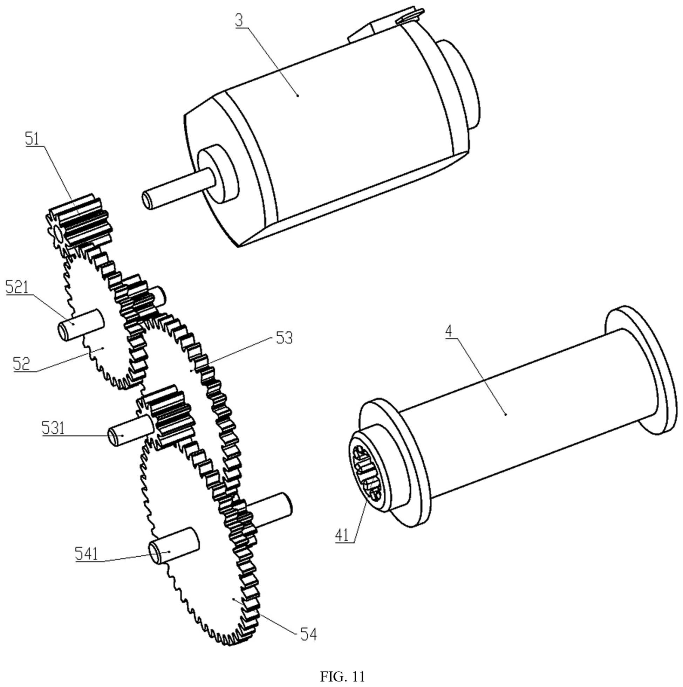

Referring to FIGS. 1 to 11, the present disclosure discloses an adhesive paper dispenser 100 for peeling an adhesive paper from a release paper during a paper conveyance process. The adhesive paper is adhered to the release paper and can be wound into an adhesive paper roll 2 as shown in FIG. 11 or folded into a stacked adhesive paper pile. The adhesive paper P2 is detachably adhered to the release paper P1. A surface of the adhesive paper P2 away from the release paper P1 is typically printed with patterns, text, QR codes, barcodes, etc., for children's entertainment or as labels. The adhesive paper dispenser 100 is configured to peel the adhesive paper P2 from the release paper P1 during the paper conveyance process and output the adhesive paper P2 through an output port 102.

Referring to FIGS. 1 to 4, the adhesive paper dispenser 100 includes a turning peeling part 123 and an adhesive paper guide part 122. The turning peeling part 123 is configured to peel the adhesive paper P2 from the release paper P1 by conveying the release paper P1 in a direction different from a traveling direction of the adhesive paper P2. The adhesive paper guide part 122 is configured to guide the adhesive paper P2 to be conveyed in a specified direction to the turning peeling part 123, such that the peeled adhesive paper P2 enters the output port 102. In the conveying direction of the adhesive paper P2, the adhesive paper guide part 122 is arranged upstream of the turning peeling part 123.

Since the adhesive paper guide part 122 guides the adhesive paper P2 conveyed to the turning peeling part 123, causing the adhesive paper P2 to travel in a specified direction, the peeled adhesive paper P2 can enter the output port 102, thereby facilitating the peeling and output of the adhesive paper P2.

Further, the adhesive paper guide part 122 includes a limiting part 1221. The limiting part 1221 is arranged on a side of the release paper P1 where the adhesive paper P2 is adhered to restrict the bending deformation of the release paper P1 before the release paper P1 is conveyed to the turning peeling part 123, which may ensure that the release paper P1 is relatively flat and taut when conveyed to the turning peeling part 123, thereby facilitating the peeling of the adhesive paper P2 at the turning peeling part 123. In some embodiments, the limiting part 1221 is arranged with several protrusions facing the release paper P1. The protrusions are configured to press against the release paper P1 to increase the conveying resistance, thereby further tautening the release paper P1. The adhesive paper guide part 122 further includes a bearing part 1222. The bearing part 1222 is arranged on a side of the release paper P1 where the adhesive paper P2 is not adhered to support the release paper P1 during the conveying process. Specifically, when the release paper P1 is pulled taut, the release paper P1 can slide in contact on the bearing part 1222. The bearing part 1222 is typically arranged on a side close to the adhesive paper roll 2 or the adhesive paper pile. The limiting part 1221 is arranged on the side of the release paper P1 where the adhesive paper P2 is adhered and is configured to restrict the bending deformation of the release paper P1. The limiting part 1221 is typically arranged on a side away from the adhesive paper roll 2 or the adhesive paper pile. Further, both the limiting part 1221 and the bearing part 1222 are plate bodies. An adhesive paper conveyance channel 1220 is defined between the bearing part 1222 and the limiting part 1221. The adhesive paper conveyance channel 1220 allows the release paper P1 with the adhered adhesive paper P2 to be conveyed straight to avoid premature peeling of the adhesive paper P2 due to bending of the release paper P1 before it reaches the output port 102. The adhesive paper conveyance channel 1220 restricts the bending deformation of the release paper P1, which includes not only straight conveying but also restricting the release paper P1 to deform with a small curvature. For example, the adhesive paper conveyance channel 1220 may be an arc-shaped channel with a small curvature, where the curvature is set to prevent the adhesive paper P2 from peeling off the release paper P1. It should be noted that the adhesive paper conveyance channel 1220 need only be configured to allow the paper strip composed of the release paper P1 and the adhesive paper P2 to pass through. In other embodiments, the bearing part 1222 and the limiting part 1221 may be configured as several rollers or ribs arranged side by side.

Referring to FIGS. 1 to 4, the adhesive paper dispenser 100 further includes a release paper guide part 124. The release paper guide part 124 is configured to guide the release paper P1, after the adhesive paper P2 is peeled off, to be conveyed in a specified direction to increase the bending angle of the release paper P1 at the turning peeling part 123. In the conveying direction of the release paper P1, the release paper guide part 124 is arranged downstream of the turning peeling part 123. A release paper guide gap 1240 is defined between the release paper guide part 124 and the turning peeling part 123 for the release paper P1 to pass through after the adhesive paper P2 is peeled off. The release paper guide part 124 has a guide slope. A top end of the guide slope forms a peeling edge 1241, which can peel off the adhesive paper P2 that remains adhered to the release paper P1 after passing through the turning peeling part 123. The adhesive paper dispenser 100 is arranged with an output port 102, which has an upper edge 1021 and a lower edge 1022. An upper surface of the turning peeling part 123 is not higher than the upper edge 1021 of the output port 102, and the peeling edge 1241 is not lower than the lower edge 1022 of the output port 102. This arrangement may ensure that both the adhesive paper P2 peeled off by the turning peeling part 123 in one step and the adhesive paper P2 auxiliary peeled off by the release paper guide part 124 can smoothly enter the output port 102 for output.

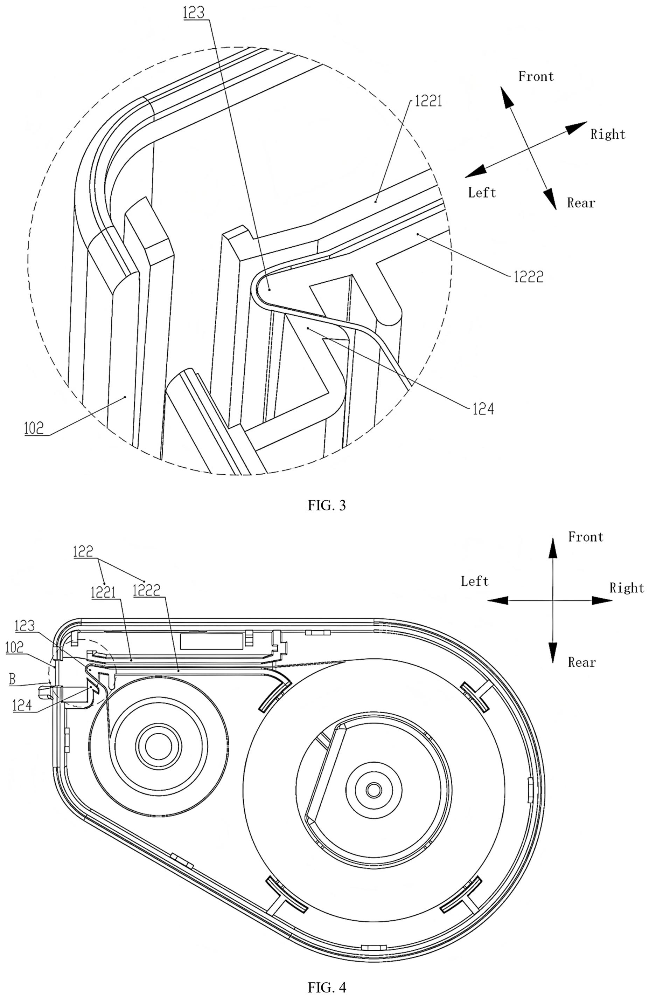

Referring to FIGS. 3 and 4 in particular, when observed in a direction perpendicular to the thickness of the release paper (i.e., perpendicular to the plane of FIGS. 3 and 4), the distance between the peeling edge 1241 and the output port 102 is not less than the distance between an outer surface of the release paper P1 and the output port 102 when the release paper P1 covers the turning peeling part 123. As shown in FIG. 4, the dashed auxiliary line L indicates the position of the outer surface of the release paper P1 when it covers the turning peeling part 123. The peeling edge 1241 is located on an inner side of the dashed auxiliary line L, i.e., a side away from the output port 102. This arrangement may ensure that the peeling edge 1241 can press against the adhesive surface of the adhesive paper P2 that has passed over the turning peeling part 123 to peel it off again. In addition, the peeling edge 1241 shall not be too far from the output port 102; otherwise, although it may peel off the adhesive paper P2, the peeled adhesive paper P2 may remain inside the dispenser and fail to output through the output port 102. Therefore, the distance between the peeling edge 1241 and the output port 102 is set to be not less than the size of the adhesive paper P2 in a direction from the peeling edge 1241 to the output port 102, thereby ensuring that the adhesive paper P2 peeled off by the peeling edge 1241 can still smoothly enter the output port 102 for output. In the conveying direction of the adhesive paper P2 (i.e., the direction from right to left in FIG. 4), the upper surface of the turning peeling part 123 extends at an incline away from the release paper guide part 124. This arrangement may allow the turning peeling part 123 to first guide the adhesive paper P2 to move at an incline upward, and then the release paper P1 suddenly changes direction, which is more conducive to peeling the adhesive paper P2. Moreover, since the peeled portion of the adhesive paper P2 is suspended and tends to sag downward due to gravity, the inclined extension allows the adhesive paper P2 to move at an incline upward, offsetting the sagging displacement caused by gravity and making it easier for the peeled portion of the adhesive paper P2 to protrude into the output port 102.

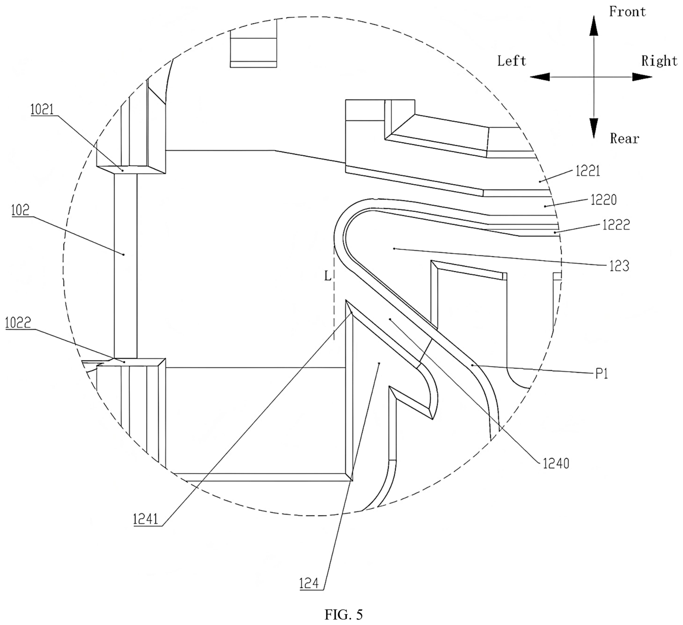

Referring to FIGS. 5 to 10, the adhesive paper dispenser 100 includes a housing 1, a motor 3, a winding shaft 4, a transmission mechanism 5, a power switch 61, and a start assembly 62. The turning peeling part 123, the adhesive paper guide part 122, and the release paper guide part 124 are all arranged on the housing 1. The following describes each component of the adhesive paper dispenser 100 in detail.

Referring to FIGS. 5 to 7, the housing 1 may be made of plastic. The turning peeling part 123, the adhesive paper guide part 122, and the release paper guide part 124 may be integrally injection-molded with the housing 1. The housing 1 has an adhesive paper storage compartment 101. The long strip-shaped release paper P1 with adhered adhesive paper P2 is wound into a roll or folded into a stack and placed in the adhesive paper storage compartment 101. The output port 102 connects the adhesive paper storage compartment 101 to the outside of the housing 1, allowing the adhesive paper P2 to be conveyed from the adhesive paper storage compartment 101 to the output port 102 and partially exposed outside the housing 1 for users to remove. In the embodiments, the housing 1 includes an upper cover 11, a base body 12, and a lower cover 13. The upper cover 11 and the lower cover 13 are plate-shaped, and the base body 12 is box-shaped with a compartment. The housing 1 has at least one peripheral plate that defines the adhesive paper storage compartment 101 inside the housing 1. In the embodiments, the base body 12 includes a peripheral plate forming the peripheral wall and a bottom wall connected to a lower end of the peripheral plate. An upper part of the base body 12 is open. The peripheral plate and the bottom wall enclose to define the adhesive paper storage compartment 101. The upper cover 11 covers the open upper part of the base body 12 to cover the adhesive paper storage compartment 101. The lower cover 13 covers and is installed below the bottom wall of the base body 12. A space for installing the transmission mechanism 5 is defined between the lower cover 13 and the bottom wall of the base body 12.

The housing 1 has a cover shell 121 extending into the adhesive paper storage compartment 101. The cover shell 121 is tube-shaped with an open lower end. Specifically, the cover shell 121 extends upward from the bottom wall of the base body 12. An opening is defined at the connection of the cover shell 121 with the bottom wall, allowing at least part of the motor 3 to be inserted into the cover shell 121 through the opening to extend into the adhesive paper storage compartment 101. The shape and size of the cover shell 121 are configured to allow the adhesive paper roll 2 to be sleeved onto and rotate around the cover shell 121. Specifically, the adhesive paper roll 2 has a central positioning hole 201. The cover shell 121 is configured to pass through the central positioning hole 201 to position the adhesive paper roll 2. The radial size of the cover shell 121 is smaller than the radial size of the central positioning hole 201 to ensure that the adhesive paper roll 2 can be sleeved onto the central positioning hole 201. In the embodiments, the radial size of the central positioning hole 201 is significantly larger than the radial size of the cover shell 121, allowing the adhesive paper roll 2 to become eccentric relative to the cover shell 121 toward one side after the release paper P1 and adhesive paper P2 wound on it are reduced, which facilitates the conveying of the adhesive paper P2. The cover shell 121 is generally cylindrical to facilitate the rotation of the adhesive paper roll 2 on it. The cover shell 121 is arranged with an avoidance part configured to define a pick-up space 1211 with the wall of the central positioning hole 201. The adhesive paper roll 2 can be gripped and removed from the pick-up space 1211. In the embodiments, at least part of the motor 3 is arranged inside the cover shell 121. To facilitate installation and alignment with the motor 3, the cover shell 121 is configured as a cylindrical tube with a vertical plane on its peripheral wall. The vertical plane forms the avoidance part. The motor 3 is arranged with a positioning part (e.g., a plane on the peripheral wall of the motor 3) corresponding to the avoidance part. The positioning part cooperates with the avoidance part to fix the motor 3 and the cover shell 121 peripherally relative to each other. The motor 3 is fixedly installed inside the cover shell 121. In the embodiments, the adhesive paper dispenser 100 is whistle-shaped. When viewed in a direction from the upstream to the downstream of the conveying direction of the adhesive paper, the external contour size of the adhesive paper dispenser 100 gradually decreases.

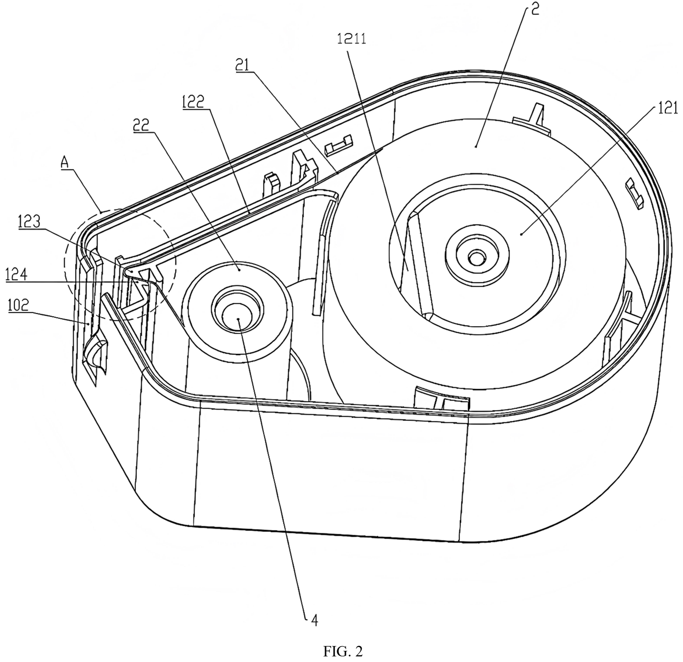

The base body 12 of the housing 1 is formed with the turning peeling part 123. The turning peeling part 123 is configured to peel the adhesive paper P2 from the release paper P1 by conveying the release paper P1 in a direction different from the traveling direction of the adhesive paper P2. In other words, the turning peeling part 123 guides the release paper P1 to bend at the turning peeling part 123, causing the adhesive paper P2 to peel off from the release paper P1. In the embodiments, a portion of the release paper P1 extending at the turning peeling part 123 forms an acute angle with a portion extending of the release paper P1 on the adhesive paper conveyance channel 1220, resulting in a large bending curvature at the turning peeling part 123, which may facilitate the peeling of the adhesive paper P2. In the conveying direction of the adhesive paper P2, the adhesive paper conveyance channel 1220 is arranged upstream of the turning peeling part 123 and close to the turning peeling part 123. The conveying direction of the adhesive paper P2 is from right to left in FIGS. 2 to 4, with the right side being upstream of the left side. The adhesive paper roll 2, formed by winding the release paper P1 with the adhered adhesive paper P2, is sleeved onto the cover shell 121. An end of the adhesive paper roll 2 is led out, passes through the adhesive paper conveyance channel 1220, and is wound around the winding shaft 4. A section of the adhesive paper roll 2 within the adhesive paper conveyance channel 1220 is a conveying section 21. A surface of the conveying section 21 faces the limiting part 1221, and the other surface of the conveying section 21 faces the bearing part 1222. The surface facing the limiting part 1221 (i.e., the surface facing forward in FIGS. 2 to 4) has the adhesive paper P2 adhered.

The base body 12 of the housing 1 is formed with the release paper guide part 124. The release paper guide part 124 is configured to assist in peeling the adhesive paper P2. The release paper guide part 124 has a peeling edge 1241 that can peel the adhesive paper P2 that has passed over the turning peeling part 123 from the release paper P1. In some cases, after the release paper P1 passes through the turning peeling part 123, the adhesive paper P2 on the release paper P1may follow the release paper P1 over the turning peeling part 123, only opening a small gap and thus not protruding from the output port 102. The release paper guide part 124 is arranged to further peel such adhesive paper P2 that has only opened a small gap and not protruded from the output port 102. The adhesive paper P2 that has passed over the turning peeling part 123 is pressed by the peeling edge 1241 of the release paper guide part 124 as it moves backward and rightward with the release paper P1, causing it to peel off. Since the peeling edge 1241 presses against the adhesive surface of the adhesive paper P2, to prevent the adhesive paper P2 from sticking to the peeling edge 1241, the peeling edge 1241 is configured as a sharp-edged blade structure to reduce the contact area with the adhesive paper P2 and minimize the risk of adhesion. A release paper guide gap 1240 is defined between the release paper guide part 124 and the turning peeling part 123 for the release paper P1 to pass through after the adhesive paper P2 is peeled off. The release paper after passing through the release paper guide gap 1240 is wound around the winding shaft 4.

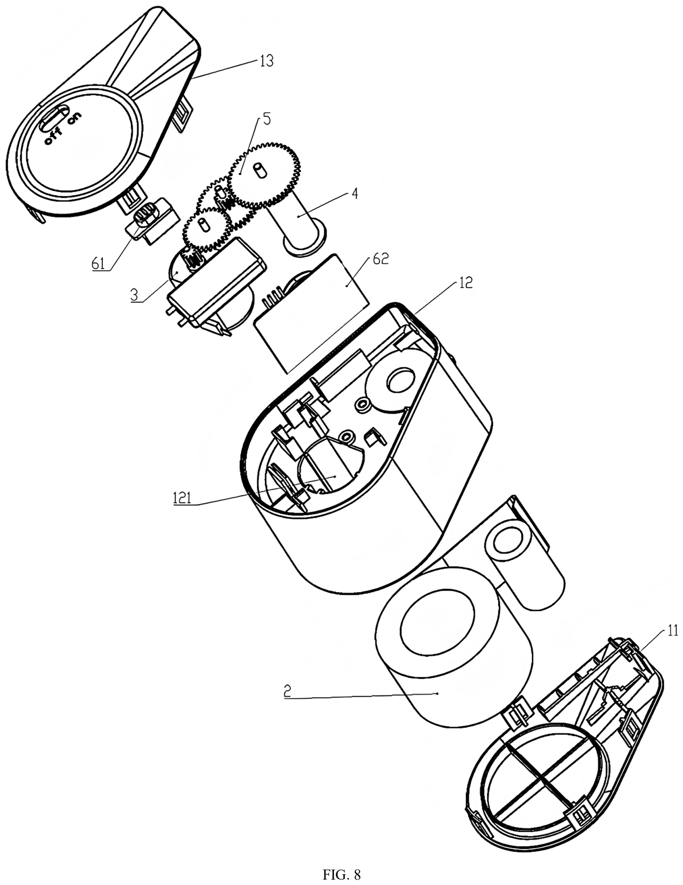

Referring to FIGS. 8 to 11, the winding shaft 4 is capable of winding the release paper P1 to convey the adhesive paper P2 to the output port 102. The motor 3 is configured to output rotational power and is connected to the winding shaft 4 in a transmission manner through the transmission mechanism 5, thereby driving the winding shaft 4 to rotate. This rotation pulls the release paper P1, achieving the conveyance and peeling of the adhesive paper P2. The release paper P1, after the adhesive paper P2 is peeled off, is wound onto the winding shaft 4 to form a release paper roll 22. A main body of the motor 3 is located within the cover shell 121 inside the adhesive paper storage compartment 101. An output shaft of the motor 3 faces downward and is disposed between the lower cover 13 of the housing 1 and the bottom wall of the base body 12. A lower end of the winding shaft 4 is also disposed between the lower cover 13 of the housing 1 and the bottom wall of the base body 12. The transmission mechanism 5 is disposed between the lower cover 13 and the bottom wall of the base body 12 and is connected between the output shaft of the motor 3 and the winding shaft 4 in a transmission manner. The transmission mechanism 5 includes a gear set connected between the motor 3 and the winding shaft 4. The gear set includes a driven gear coupled to the winding shaft 4. The lower end of the winding shaft 4 is arranged with a sleeve part 41 that meshes with and connects to the driven gear. Specifically, in the embodiments, the gear set includes a first gear 51, a second gear 52, a third gear 53, and a fourth gear 54. The second to fourth gears are all two-layer gears. The first gear 51 is sleeved onto the output shaft of the motor 3. The second gear 52 meshes with and is connected to the first gear 51 in a transmission manner. The third gear 53 meshes with and is connected to the second gear 52 in a transmission manner. The fourth gear 54 meshes with and is connected to the third gear 53 in a transmission manner. The fourth gear 54 serves as the driven gear. An inner wall surface of the sleeve part 41 of the winding shaft 4 is arranged with a tooth structure to mesh with and connect to the fourth gear 54. The second gear 52 is fixedly arranged with a second gear shaft 521. The third gear 53 is fixedly arranged with a third gear shaft 531. The fourth gear 54 is fixedly arranged with a fourth gear shaft 541. The gear shafts are provided to enable the support and installation of the corresponding gears between the lower cover 13 and the bottom wall of the base body 12. An end of the fourth gear shaft 541 facing the winding shaft 4 is tightly inserted into the winding shaft 4 via an interference fit to ensure a reliable connection between the fourth gear 54 and the winding shaft 4.

During use, the adhesive paper roll 2 is installed in the adhesive paper storage compartment 101 and sleeved onto the cover shell 121. A starting end of the release paper P1 is wound around the winding shaft 4. The installation of the adhesive paper roll 2 and the winding of the starting end of the release paper P1 may be pre-assembled before the adhesive paper dispenser 100 leaving the factory. The power switch 61 is turned on, allowing the power source to supply electricity to the electrical components within the adhesive paper dispenser 100. The start assembly 62 is pressed to control the motor 3 to rotate, which drives the winding shaft 4 to rotate via the transmission mechanism 5. The rotation of the winding shaft 4 pulls the release paper P1 and the adhesive paper P2 to move from the adhesive paper roll 2 towards the output port 102. After the release paper P1 passes through the adhesive paper conveyance channel 1220 and the turning peeling part 123, the adhesive paper P2 on the release paper P1 is peeled off and exposed within the output port 102. When the adhesive paper P2 is not completely peeled off in one step by the turning peeling part 123, it is peeled off again by being pressed against the release paper guide part 124 after passing over the turning peeling part 123, and is exposed within the output port 102. The adhesive paper dispenser 100 further includes a detection sensor disposed at the output port 102. When the sensor detects the presence of the adhesive paper P2 at the output port 102, the sensor controls the motor 3 to stop. Thereby, pressing the start assembly 62 once results in the peeling and output of one piece of adhesive paper P2, achieving the distribution of the adhesive paper P2.

The adhesive paper dispenser 100 provided in the present disclosure may be a toy adhesive paper dispenser, i.e., a toy for children's entertainment or a component of a toy for children's entertainment. It has a small, lightweight structure, making it easy to carry and use. It may further be a stationery item for learning or office use.

From the description of the specific embodiments above, it can be seen that the adhesive paper dispenser 100 provided in the present disclosure includes a turning peeling part 123 and an adhesive paper guide part 122. In the conveying direction of the adhesive paper P2, the adhesive paper guide part 122 is configured upstream of the turning peeling part 123. The adhesive paper guide part 122 can guide the adhesive paper P2 to be conveyed in a specified direction to the turning peeling part 123, such that the peeled adhesive paper P2 enters the designated output port 102. Because the adhesive paper P2 conveyed to the turning peeling part 123 is guided by the adhesive paper guide part 122, causing the adhesive paper P2 to travel in the specified direction, the peeled adhesive paper P2 can enter the designated output port 102, thereby facilitating the peeling and output of the adhesive paper P2.

### Embodiment 2

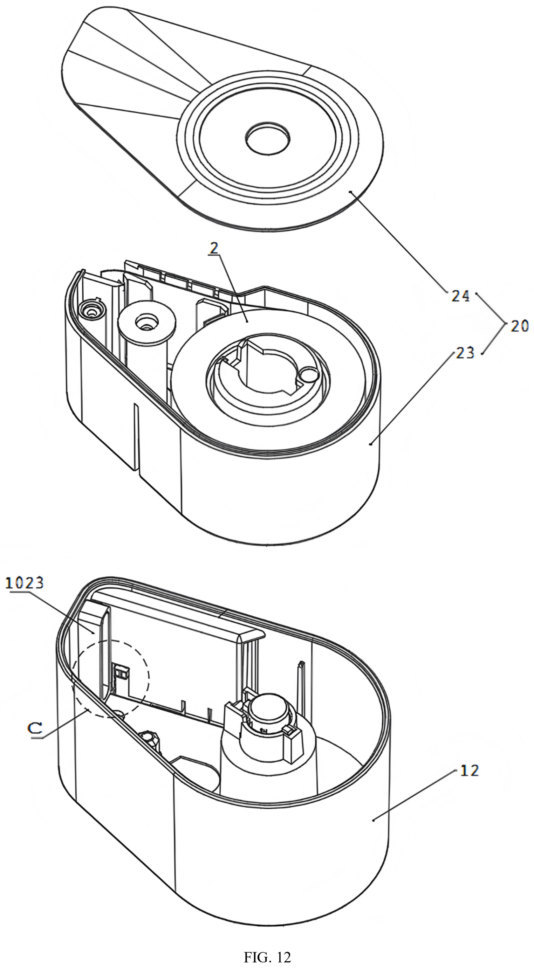

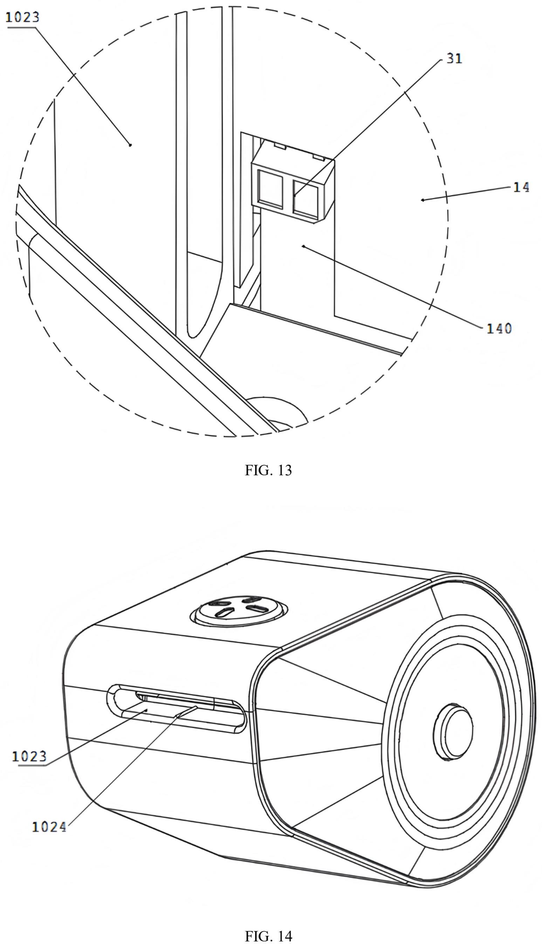

Referring to FIGS. 12 to 14, which illustrate an adhesive paper dispenser in Embodiment 2 of the present disclosure. In the embodiments, the adhesive paper dispenser includes a photoelectric device 31 and a light-shielding part 1023. The photoelectric device 31 is configured to acquire output information of the adhesive paper based on a photoelectric signal. The photoelectric device 31 is arranged close to the output port 102. The light-shielding part 1023 is configured to block external light from entering the photoelectric device 31 through the output port 102. The light-shielding part 1023 is configured to prevent the external light from interfering with the photoelectric signal.

Furthermore, the light-shielding part 1023 is formed at the edge of the output port 102 and extends from the output port 102 towards the photoelectric device. A surface of the light-shielding part 1023 opposite to the adhesive surface of the adhesive paper is arranged with an anti-adhesion part 1024. The anti-adhesion part 1024 may be a rib or a protrusion, and a top of the rib or protrusion is formed into a blade edge.

In the embodiments, the adhesive paper dispenser 100 includes an adhesive paper box 20 detachably installed on the base body 12. The adhesive paper box 20 includes a box cover 24 and a box body 23. The adhesive paper roll 2 is installed within the adhesive paper box 20, and the entire adhesive paper box 20 can be removed for replacement. An operation circuit board is installed inside the shell of the base body 12. The photoelectric device 31 is disposed on the operation circuit board. The cover plate 14 is arranged on the shell of the base body 12 to cover the operation circuit board. The cover plate 14 defines an avoidance hole 140 to avoid blocking the photoelectric device 31, allowing the photoelectric device 31 to be exposed. The avoidance hole 140 is configured to prevent the photoelectric device 31 from being blocked by the cover plate 14. The cover plate 14 covers most areas of the operation circuit board, thereby providing protection for the operation circuit board. In other embodiments, the adhesive paper dispenser 100 may not include the adhesive paper box 20; for example, the relevant structures on the adhesive paper box 20 may be directly provided on the base body 12.

The adhesive paper dispenser 100 provided in the embodiments includes a photoelectric device 31 arranged near the output port 102. The photoelectric device 31 is configured to detect output information of the adhesive paper, thereby facilitating improved intelligent control and intelligent prompting of the adhesive paper dispenser 100. The adhesive paper dispenser 100 includes a light-shielding part 1023, which is configured to block external light from entering the photoelectric device 31 through the output port 102, thereby preventing interfering with the detection accuracy. This may make the detection more accurate, avoid misjudgment, and enhance the accuracy of intelligent control and prompting of the adhesive paper dispenser 100.

### Embodiment 3

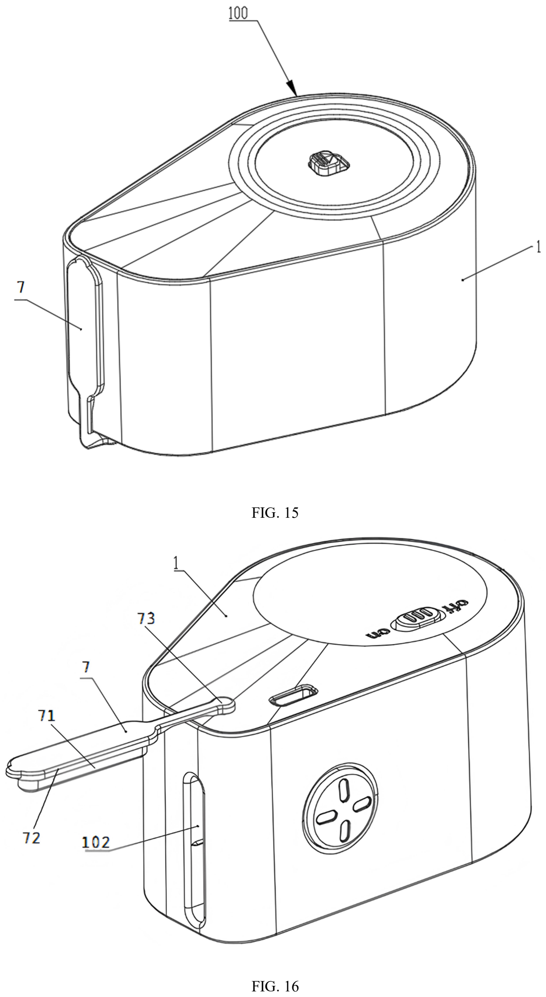

Referring to FIGS. 15 and 16, which illustrate an adhesive paper dispenser in Embodiment 3 of the present disclosure. In the embodiments, the adhesive paper is a mosquito-repellent sticker that can emit a mosquito-repellent odor. The adhesive paper dispenser 100 further includes:
a sealing device 7, detachably sealing the output port 102; such that when the adhesive paper dispenser 100 is in a non-working state, the odor of the mosquito-repellent stickers is prevented from escaping through the output port 102.

Furthermore, the sealing device 7 includes a plug part 71 inserted into the output port 102 and a cover part 72 connected to the plug part 71. The cover part 72 covers the outside of the output port 102. The sealing device 7 further includes a connecting part 73. When the sealing device 7 is separated from the output port 102, the sealing device 7 can be attached to the adhesive paper dispenser 100 via the connecting part 73.

During use, the plug part 71 is inserted into the mosquito-repellent sticker output port 102, squeezing against an inner side wall surface of the output port 102, thereby fixing the plug part 71 and simultaneously sealing the output port 102. The cover part 72 is located outside the output port 102, which may further enhance the sealing. In addition, the arrangement of the cover part 72 may further facilitate pulling the plug part 71 of the sealing device 7 out of the output port 102. The edge of the cover part 72 can further extend to form a protruding part for the user to pinch, facilitating the removal of the sealing device 7 from the output port 102. In the embodiments, the sealing device 7 is a flexible member that can elastically deform, making it easy to achieve an interference fit with the output port 102 for fixation and providing good sealing. In the embodiments, the sealing device 7 may be a rubber member, such as a silicone member.

When the adhesive paper dispenser 100 provided in the embodiments is to be used, the sealing device 7 is pulled out from the output port 102, and the power of the adhesive paper dispenser 100 is turned on to peel the mosquito-repellent sticker from the release paper and output the sticker through the output port 102. The user can therefore take off the mosquito-repellent sticker and attach it to parts such as the arm or clothing to serve functions like emitting a fresh fragrance, thereby repelling mosquitoes, refreshing the mind, and calming nerves to aid sleep. When the adhesive paper dispenser 100 is not in use, the plug part 71 of the sealing device 7 is inserted into the output port 102 to prevent the odor of the undistributed mosquito-repellent stickers from escaping through the output port 102.

### Embodiment 4

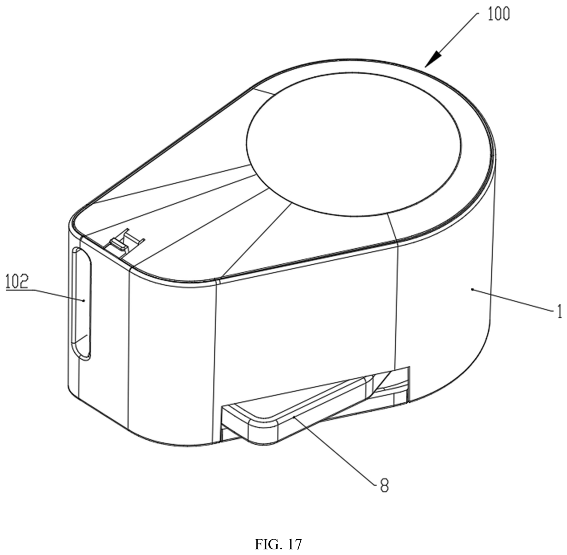

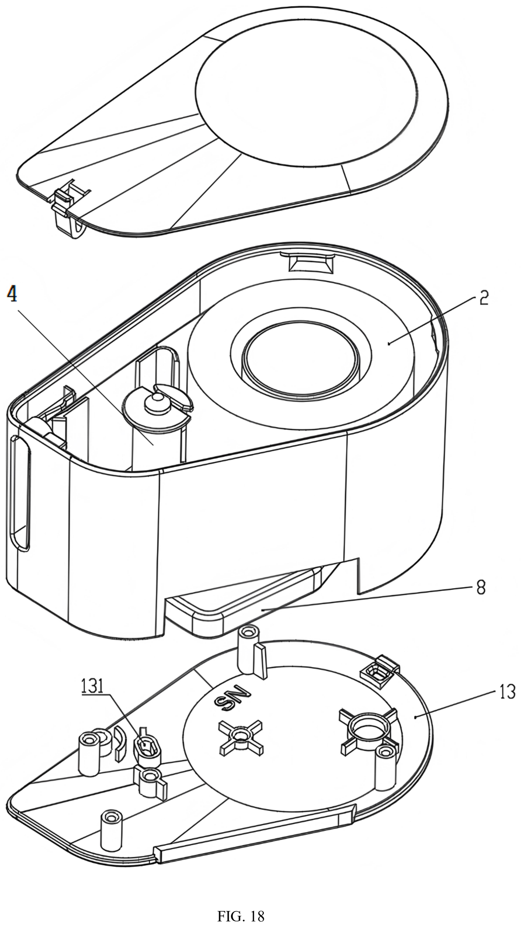

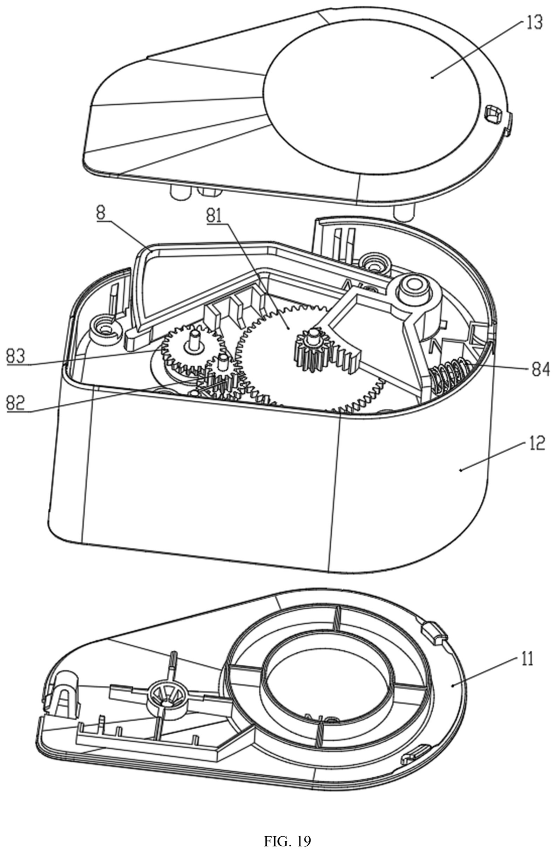

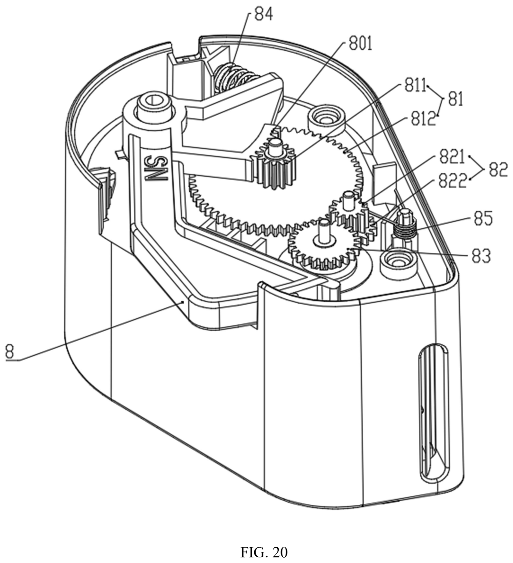

Referring to FIGS. 17 to 22, which illustrate an adhesive paper dispenser in Embodiment 4 of the present disclosure. The main difference between the present embodiments and Embodiment 1 lies in the driving method. Embodiment 1 adopts motor drive, while the present embodiments adopt manual drive.

Specifically, the manual adhesive paper dispenser 100 includes a winding shaft 4, a transmission mechanism, and an operating member 8. The operating member 8 is connected to the transmission mechanism, and the transmission mechanism is connected to the winding shaft 4 in a transmission manner. The operating member 8 is configured to be operably reciprocating within a set range. Specifically, the operating member 8 is configured to be driven by an operating force to move in a first direction from a first position to a second position, and to be able to move in a second direction opposite to the first direction when the operating force is released, so as to return from the second position to the first position. During a process of the operating member 8 moving from the first position to the second position, a continuous power transmission chain is formed by the operating member 8, the transmission mechanism, and the winding shaft 4, thereby driving the winding shaft 4 to rotate forward and wind the release paper. During a process of the operating member 8 returning from the second position to the first position, the power transmission is disconnected at least at one point among the operating member 8, the transmission mechanism, and the winding shaft 4, thereby avoiding driving the winding shaft 4 to reverse.

In the embodiments, the adhesive paper dispenser 100 includes a base body 12, an upper cover 11 covering a top of the base body 12, and a lower cover 13 covering a bottom of the base body 12. The operating member 8 may be a pressable component, specifically a lever mechanism configured to pivot about a set axis. The operating member 8 is pivotally connected to a housing of the adhesive paper dispenser 100 and includes a pressing part and a rack part 801. The pressing part is exposed outside the housing for the user to press. The operating member 8 is in the first position before being pressed and can move to the second position when pressed. When the pressing part is pressed, the operating member 8 rotates about its pivot shaft, driving the rack part 801 to move. The operating member may be an integral piece, which may be formed by plastic injection molding. Several teeth may be integrally formed on the rack part 801 for cooperating with the transmission mechanism to transmit power. In some embodiments, the rack part 801 is arc-shaped, and the center of the arc is the center of the pivot shaft of the operating member 8. An end of the operating member 8 near the rack part 801 is elastically pressed by a return spring 84. The elastic force provided by the return spring 84 is opposite to the direction of the pressing force. When the pressing force applied to the pressing part is removed, the return spring 84 pushes the operating member 8 to rotate back to the first position before the pressing force was applied.

The transmission mechanism may be a gear train transmission mechanism including multiple gears coupled to each other. The transmission mechanism is configured to connect the operating member 8 and the winding shaft 4 in a transmission manner and can transmit the power output by the operating member 8 to the winding shaft 4 to drive its rotation. The transmission mechanism includes a one-way clutch device configured to couple and implement power transmission when the operating member 8 moves in the first direction, and to separate and disconnect the power transmission when the operating member 8 moves in the second direction opposite to the first direction. In the embodiments, the transmission mechanism includes a driven gear 83 relatively fixed to the winding shaft 4, a drive gear 81 meshing with the rack part 801 of the operating member 8, and a movable gear 82 disposed between the driven gear 83 and the drive gear 81. Specifically, the transmission mechanism includes the drive gear 81, which is located upstream of the movable gear 82 in the power transmission direction and remains coupled to the movable gear 82, and the driven gear 83, which is located downstream of the movable gear 82 in the transmission direction and is separably coupled to the movable gear 82.

A gear shaft of the drive gear 81 is non-translatably connected to the housing. The drive gear 81 can only rotate about the axis of its gear shaft and cannot move axially or radially. In the embodiments, the drive gear 81 is a two-layer tower gear with a coaxial small-diameter wheel 811 and a large-diameter wheel 812. The small-diameter wheel 811 of the drive gear 81 meshes with the rack part 801 of the operating member 8, and the large-diameter wheel 812 of the drive gear 81 meshes with the movable gear 82. In another embodiment, only the large-diameter wheel 812 may be considered as the drive gear, and the small-diameter wheel 811 may be considered as a first gear further included in the transmission mechanism and coupled to the rack part 801. The first gear and the drive gear are coaxially arranged, where the diameter D of the drive gear is more than twice the diameter d of the first gear.

The movable gear 82 is configured to be movable between a coupled position and a separated position. That is, a gear shaft of the movable gear 82 is translatably connected to the housing, while the movable gear 82 can further rotate about the axis of its gear shaft. An end of the gear shaft of the movable gear 82 is connected to the bottom wall of the base body 12, and the other end of the gear shaft of the movable gear 82 is connected to the lower cover 13. Specifically, a guide groove on the bottom wall of the base body 12 and a guide groove 131 on the lower cover 13 are defined for the two ends of the gear shaft of the movable gear 82 to insert into and slide within respectively. When the rack part 801 of the operating member 8 meshes with the movable gear 82, the rack part 801 can push the movable gear 82 to slide along the guide grooves 131. When sliding to the coupled position, the movable gear 82 can mesh with the driven gear 83; when sliding to the separated position, the movable gear 82 disengages from the driven gear 83.

In the embodiments, the one-way clutch device includes the movable gear 82 and an elastic member 85. The movable gear 82 is elastically pushed by the elastic member 85. The elastic member 85 is configured to apply an elastic force that keeps the movable gear 82 in the coupled position. When the operating member 8 moves from the second position to the first position along the second direction, the operating member 8 drives the movable gear 82 to overcome the elastic force and slide to the separated position. The elastic member 85 may be a torsion spring or a spring plate, having an elastic arm that rests against the movable gear 82 to apply the elastic force. In the illustrated embodiments, the elastic member 85 is a torsion spring with two elastic arms, one pressing against the movable gear 82 and the other pressing against the housing. The embodiments may overcome the spring force of the elastic member 85 to separate the movable gear 82 from the driven gear 83. In another embodiment, the elastic member 85 is configured to apply an elastic force that keeps the movable gear 82 in the separated position. When the operating member 8 moves from the first position to the second position along the first direction, the operating member 8 drives the movable gear 82 to overcome the elastic force and slide to the coupled position. In the embodiments, the movable gear 82 is released to separate under the spring force of the elastic member 85. For the embodiments, when the external force on the operating member 8 is removed, the elastic member 85 immediately drives the movable gear 82 to the separated position from the driven gear 83. The separation is timelier, thereby better avoiding driving the driven gear 83 to reverse. For the embodiments, when the operating member 8 moves in the first direction, there is a small sliding distance during which the movable gear 82 moves from the separated position to the coupled position. During this distance, the driven gear 83 is not driven, meaning the operating member 8 has a small amount of idle travel. In the embodiments described above, the elastic return force provided by the return spring 23 is greater than the elastic force applied by the elastic member 85 to the movable gear 82.

In the embodiments, the movable gear 82 may be a two-layer tower gear with a coaxial small-diameter wheel 821 and a large-diameter wheel 822. The small-diameter wheel 821 of the movable gear 82 meshes with the driven gear 83, and the large-diameter wheel 822 of the movable gear 82 meshes with the large-diameter wheel 812 of the drive gear 81. The arrangement of the drive gear 81 and the movable gear 82 may achieve an amplification effect. During the process of the operating member 8 moving from the first position to the second position, the rotation angle of the drive gear 81 is smaller than that of the driven gear 83.

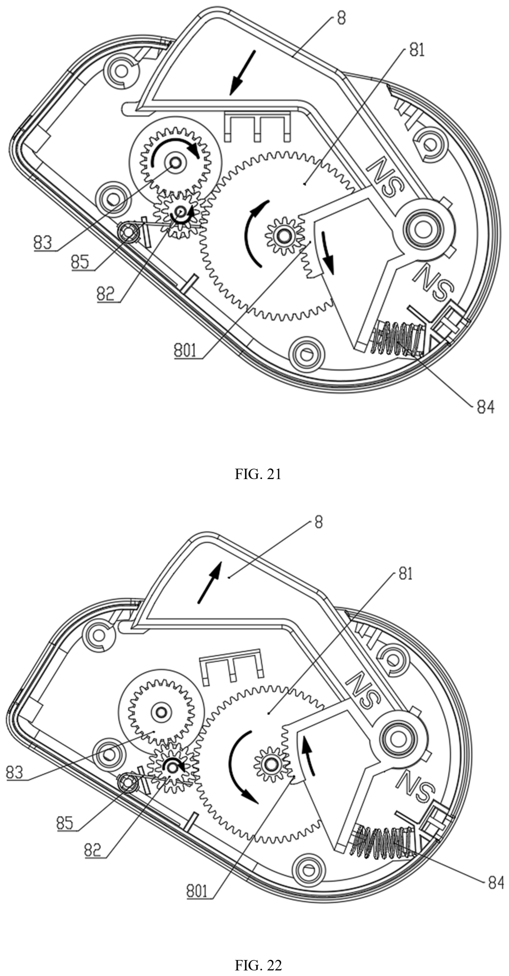

Referring especially to FIG. 21, which is a schematic diagram of the transmission mechanism's action during the process when the operating member 8 is driven by an operating force to move in the first direction. A force indicated by the arrow on the pressing part of the operating member 8 is applied. The rack part 801 of the operating member 8 rotates inward as indicated by its arrow. The drive gear 81 rotates clockwise as shown in FIG. 21. At this time, the movable gear 82 is pushed to translate towards the driven gear 83 and meshes with the driven gear 83. The driven gear 83 rotates clockwise as shown, driving the winding shaft 4 to rotate, thereby pulling the release paper to move and achieving the peeling and output of the adhesive paper.

Referring especially to FIG. 22, which is a schematic diagram of the transmission mechanism's action during the process when the operating force on the operating member 8 is released, and the operating member 8 is driven by the return spring 84 to move in the second direction to return to the first position. A force indicated by the arrow on the rack part 801 of the operating member 8 is applied. The pressing part of the operating member 8 moves outward as indicated by its arrow. The drive gear 81 rotates counterclockwise as shown. At this time, the movable gear 82 is pushed to translate away from the driven gear 83 and disengages from meshing with the driven gear 83. The rotation of the drive gear 81 driving the movable gear 82 cannot be transmitted to the driven gear 83, meaning the driven gear 83 will not rotate in reverse, and the winding shaft 4 does not move. This avoids the reverse rotation of the winding shaft 4 during the resetting of the operating member 8, which could cause the already wound release paper to loosen, resulting in the failure to output adhesive paper upon the next press.

It should be noted that the embodiments are described taking an example where the movable gear 82 can disengage from the driven gear 83. Understandably, in other embodiments, any point in the transmission chain from the operating member 8 to the winding shaft 4 may be configured to allow disengagement. Also, it should be noted that the embodiments adopt the translation of the movable gear 82 to switch between engagement and disengagement. In other embodiments, a ratchet and pawl mechanism may be applied to implement the same. For example, in some embodiments, the one-way clutch device is a one-way bearing, i.e., an overrunning clutch, which is engaged on a transmission gear within the transmission mechanism.

The manually operated adhesive paper dispenser 100 provided in the embodiments may achieve adhesive paper output by manually applying force to the operating member 8. It does not require electrical components, which may reduce costs, while enhancing operability and entertainment value.

The above descriptions are merely specific implementations of the present disclosure, but the scope of the present disclosure is not limited thereto. Those skilled in the art, within the technical scope disclosed in the present disclosure, can easily think of changes or substitutions, which shall be covered within the scope of the present disclosure. Therefore, the scope of the present disclosure shall be subject to the scope of the claims.

## Claims

1. An adhesive paper dispenser, for peeling an adhesive paper from a release paper during a paper conveyance process, **characterized by** comprising:
a turning peeling part, configured to peel the adhesive paper from the release paper by conveying the release paper in a direction different from a traveling direction of the adhesive paper; and
an adhesive paper guide part, configured to guide the adhesive paper to be conveyed in a specified direction to the turning peeling part, enabling the peeled adhesive paper to enter an output port of the adhesive paper dispenser;
wherein in a conveying direction of the adhesive paper, the adhesive paper guide part is arranged upstream of the turning peeling part.

2. The adhesive paper dispenser according to claim 1, wherein the adhesive paper guide part comprises a limiting part; the limiting part is arranged on a side of the release paper where the adhesive paper is adhered to restrict bending deformation of the release paper.

3. The adhesive paper dispenser according to claim 2, wherein the limiting part is arranged with a plurality of protrusions facing the release paper; the plurality of protrusions are configured to press against the release paper to increase conveying resistance.

4. The adhesive paper dispenser according to claim 2, wherein the adhesive paper guide part further comprises a bearing part; the bearing part is arranged on another side of the release paper where the adhesive paper is not adhered to support the release paper during the conveying process; an adhesive paper conveyance channel is defined between the bearing part and the limiting part.

5. The adhesive paper dispenser according to claim **1,** wherein the adhesive paper dispenser further comprises a release paper guide part; the release paper guide part is configured to guide the release paper to be conveyed in another specified direction to increase a bending angle of the release paper at the turning peeling part.

6. The adhesive paper dispenser according to claim 5, wherein a release paper guide gap is defined between the release paper guide part and the turning peeling part for the release paper to pass through after the adhesive paper is peeled off.

7. The adhesive paper dispenser according to claim 5, wherein the release paper guide part comprises a peeling edge, and the peeling edge is configured to peel off the adhesive paper that remains adhered to the release paper after passing through the turning peeling part.

8. The adhesive paper dispenser according to claim 5, wherein in the conveying direction of the adhesive paper, an upper surface of the turning peeling part extends at an incline away from the release paper guide part.

9. The adhesive paper dispenser according to claim 5, wherein the adhesive paper dispenser further comprises a housing; the turning peeling part, the adhesive paper guide part, and the release paper guide part are integrally formed on the housing.

10. The adhesive paper dispenser according to claim 9, wherein the housing has an adhesive paper storage compartment; the release paper, that is strip-shaped and adhered with the adhesive paper, is wound into a roll or folded into a stack and placed in the adhesive paper storage compartment.

11. The adhesive paper dispenser according to claim 1, wherein the adhesive paper dispenser further comprises:
a housing, defining an adhesive paper storage compartment and the output port; wherein the adhesive paper storage compartment is configured to accommodate an adhesive paper roll;
a winding shaft, capable of winding the release paper to convey the adhesive paper to the output port; and
a motor, configured to output rotational power and connected to the winding shaft in a transmission manner;
wherein the motor is at least partially arranged within the adhesive paper storage compartment and adapted to pass through a central positioning hole of the adhesive paper roll.

12. The adhesive paper dispenser according to claim 11, wherein the housing comprises a cover shell extending into the adhesive paper storage compartment, and the motor is at least partially arranged within the cover shell.

13. The adhesive paper dispenser according to claim 12, wherein the cover shell is configured to pass through the central positioning hole to position the adhesive paper roll.

14. The adhesive paper dispenser according to claim 13, wherein the cover shell is arranged with an avoidance part configured to define a pick-up space with a wall of the central positioning hole; the adhesive paper roll is adapted to be gripped and removed from the pick-up space.

15. The adhesive paper dispenser according to claim 14, wherein the motor is arranged with a positioning part matching with the avoidance part; the positioning part is configured to cooperate with the avoidance part to fix the motor and the cover shell peripherally relative to each other.

16. The adhesive paper dispenser according to claim 11, wherein an external contour size of the adhesive paper dispenser gradually decreases when viewed in a direction from upstream to downstream of the conveying direction of the adhesive paper.

17. The adhesive paper dispenser according to claim 1, wherein the adhesive paper dispenser further comprises:
a photoelectric device, configured to acquire output information of the adhesive paper based on a photoelectric signal; wherein the photoelectric device is arranged close to the output port; and
a light-shielding part, configured to block external light from entering the photoelectric device through the output port for preventing the external light from interfering with the photoelectric signal.

18. The adhesive paper dispenser according to claim 17, wherein the light-shielding part is formed on an edge of the output port and extends from the output port towards the photoelectric device.

19. The adhesive paper dispenser according to claim 18, wherein a surface of the light-shielding part opposite to an adhesive surface of the adhesive paper is arranged with an anti-adhesion part; the anti-adhesion part is a rib or a protrusion, and a top of the rib or protrusion is formed into a blade edge.

20. The adhesive paper dispenser according to claim 1, wherein the adhesive paper is a mosquito-repellent sticker capable of emitting a mosquito-repellent odor, and the adhesive paper dispenser further comprises:
a sealing device, detachably sealing the output port, for preventing the mosquito-repellent odor from escaping through the output port in a case where the adhesive paper dispenser is in a non-working state.

21. The adhesive paper dispenser according to claim 20, wherein the sealing device comprises a plug part and a cover part connected to the plug part; wherein the plug part is configured to be inserted into the output port, and the cover part is configured to cover an outside of the output port.

22. The adhesive paper dispenser according to claim 21, wherein the sealing device further comprises a connecting part; in a case where the sealing device is separated from the output port, the sealing device is capable of being attached to the adhesive paper dispenser via the connecting part.

23. The adhesive paper dispenser according to claim 1, wherein the adhesive paper dispenser further comprises:
a housing;
a winding shaft, capable of winding the release paper to convey the adhesive paper to the output port;
an operating member, configured to be operably reciprocating within a set range; and
a transmission mechanism, configured to connect the operating member and the winding shaft in a transmission manner and capable of transmitting power output by the operating member to the winding shaft to drive the winding shaft to drive;
wherein the transmission mechanism comprises a one-way clutch device, configured to couple and implement power transmission in a case where the operating member moves in a first direction, and to separate and disconnect the power transmission in a case where the operating member moves in a second direction opposite to the first direction.

24. The adhesive paper dispenser according to claim 23, wherein the transmission mechanism is a gear train transmission mechanism including multiple gears coupled to each other; the one-way clutch device comprises:
a movable gear, movable between a coupled position and a separated position; and
a force-applying member, configured to apply an elastic force to the movable gear in a direction that maintains the movable gear in the coupled position;
wherein, in a case where the operating member moves in the second direction, the movable gear is capable of overcoming the elastic force to move from the coupled position to the separated position.

25. The adhesive paper dispenser according to claim 23, wherein the transmission mechanism is a gear train transmission mechanism including multiple gears coupled to each other; the one-way clutch device comprises:
a movable gear, movable between a coupled position and a separated position; and
a force-applying member, configured to apply an elastic force to the movable gear in a direction that maintains the movable gear in the separated position;
wherein, in a case where the operating member moves in the first direction, the movable gear is capable of overcoming the elastic force to move from the separated position to the coupled position.

26. The adhesive paper dispenser according to claim 24 or 25, wherein the transmission mechanism comprises:
a drive gear, disposed upstream of the movable gear in a transmission direction of the power and maintained in coupling with the movable gear; and
a driven gear, disposed downstream of the movable gear in the transmission direction of the power and detachably coupled with the movable gear;
wherein, in a case where the operating member moves in the second direction, the drive gear acts on the movable gear in a direction to separate the movable gear from the driven gear.
